# EUROPÄISCHE PATENTSCHRIFT

(11) **EP 2 568 142 B1**
(45) Veröffentlichungstag und Bekanntmachung des Hinweises auf die Patenterteilung: **04.06.2014**
(21) Anmeldenummer: 11180708.7
(22) Anmeldetag: 09.09.2011
(51) Int. Cl.: F02C 3/26, F02C 6/18, F02C 7/224, F01K 17/06

(54) **Biomassekraftwerk**
Biomass plant
Centrale à biomasse

(43) Veröffentlichungstag der Anmeldung: 13.03.2013
(73) Patentinhaber: Bio Energie Vulkaneifel GmbH, 54552 Mehren (DE)
(72) Erfinder: Tombers, Dietmar, 54550 Daun (DE)
(74) Vertreter: Kohlmann, Kai

(56) Entgegenhaltungen:
- WO-A2-2009/010023
- DE-A1-102006 009 778

## Beschreibung

Die Erfindung betrifft ein Biomassekraftwerk mit einer Brennkammer für Biomasse, wobei die Brennkammer über einen ersten Wärmetauscher an einen Kreislauf für ein Wärmeträgermedium gekoppelt ist, der Kreislauf für das Wärmeträgermedium über einen zweiten Wärmetauscher an einen Turbinenkreislauf mit einer Dampfturbine gekoppelt ist, der Turbinenkreislauf über einen dritten Wärmetauscher an einen Rückkühlkreislauf mit mindestens einem ein Gebläse aufweisenden Rückkühler gekoppelt ist.

Ein Biomassekraftwerk (BMKW) erzeugt durch die Verbrennung fester Biomasse elektrische Energie. Ein Biomasseheizkraftwerk stellt darüber hinaus Wärme bereit, die beispielsweise als Fern- oder Nahwärme genutzt werden kann. Als Brennstoff werden feste Brennstoffe wie z. B. Reste aus der Holzverarbeitung, nicht als Nutzholz geeignetes Waldholz, Stroh und Altholz eingesetzt.

Bedeutende Anlagentypen sind Biomasse-Dampfkraftwerke und Biomasse-ORC-Anlagen. Bei Biomasse-ORC-Anlagen wird zumeist ein Rauchrohr-Wärmetauscher eingesetzt, der von der mit Biomasse beheizten Brennkammer mit heißen Rauchgasen beaufschlagt wird und dabei das Wärmeträgermedium (Thermoöl) in dem Kreislauf für das Wärmeträgermedium erhitzt. Das etwa bis 400 °C heiße Thermoöl wird dem Turbinenkreislauf, der eigentlichen ORC-Anlage zugeführt, die über einen klassischen Dampfprozess Strom erzeugt. Als Arbeitsmedium wird jedoch kein Wasser verwendet, sondern eine organische Flüssigkeit mit einer Verdampfungstemperatur unterhalb von Wasser.

Moderne, mit Holz befeuerte Biomassekraftwerke erreichen elektrische Brutto-Wirkungsgrade von rund 30 %. In einem Biomassekraftwerk gehen also bis zu 70% der Bioenergie als Wärme verloren. Zur Steigerung des Wirkungsgrads wird daher die Abwärme z.B. als Fern- oder Nahwärme genutzt.

Die DE 10 2006 009 778 A1 offenbart ein Biomassekraftwerk mit einer Brennkammer für Biomasse, nämlich Holzhackschnitzel. Die Abwärme wird über einen Wärmetauscher und einen Gebläseluftstrom-Wärmetauscher zur Trocknung der Biomasse in einer Lagerhalle verwendet. Die getrockneten Holzhackschnitzel werden mit einem Frontlader über eine Fördereinrichtung der Brennkammer für die Biomasse zugeführt.

Die WO 2009/010023 A2 offenbart eine Vorrichtung und ein Verfahren zur Nutzung der Abwärme eines Biomassekraftwerks mit einer Brennkammer für Biomasse in Form von Holzhackschnitzeln, wobei die Abwärme zur Trocknung der Biomasse in einer Trocknungsvorrichtung verwendet wird. Die getrocknete Biomasse wird nach der Trocknung der Brennkammer des Biomassekraftwerks zugeführt. Die Abwärme des Biomassekraftwerks wird zusätzlich über einen Wärmetauscher zum Betrieb einer ORC-Turbine verwendet, die einen zweiten Generator antreibt.

Ausgehend von diesem Stand der Technik liegt der Erfindung die Aufgabe zu Grunde, den Wirkungsgrad eines Biomassekraftwerks zu verbessern.

Diese Aufgabe wird bei einem Biomassekraftwerk der eingangs erwähnten Art dadurch gelöst, dass die Brennkammer über ein Fördermittel mit einem Vorratsraum für Biomasse verbunden ist und jeder Rückkühler an einer der seitlichen oder oberen Begrenzungsflächen des Vorratsraums derart angeordnet ist, dass der von jedem Gebläse erzeugte Luftstrom in das Innere des Vorratsraums gelangt.

Indem der von den Rückkühlern erwärmte Luftstrom in das Innere des Vorratsraums für die Biomasse gelangt, wird die Luftfeuchte in dem Vorratsraum erheblich abgesenkt und die Biomasse getrocknet. Die optimale Trocknung der Biomasse führt zu einer Wirkungsgradverbesserung, da zur Erzeugung derselben Wärmemenge in der Brennkammer weniger Biomasse benötigt wird. Zugleich wird die in dem Rückkühlkreislauf entstehende Abwärme wirkungsgradsteigernd genutzt.

Der der Brennkammer nachgeordnete Turbinenkreislauf ist vorzugsweise ein ORC-Turbinenkreislauf. Die Abkürzung ORC steht für Organic Rankine Cycle. Hierbei handelt es sich um ein Verfahren zum Betrieb von Dampfturbinen mit einem anderen Arbeitsmittel als Wasserdampf. Als Arbeitsmittel werden organische Flüssigkeiten, wie beispielsweise ein Silikonöl mit einer gegenüber Wasser niedrigeren Verdampfungstemperatur verwendet. ORC-Verfahren kommen vor allem dann zum Einsatz, wenn das Temperaturgefälle zwischen Wärmequelle und -senke zu niedrig für den Betrieb einer mit Wasserdampf angetriebenen Turbine ist. Ein weiterer Vorteil des ORC-Turbinenkreislaufs besteht darin, dass ein weniger personalintensiver Betrieb zulässig ist.

In der Praxis hat es sich als vorteilhaft herausgestellt, wenn der von dem Gebläse erzeugte Luftstrom im Wesentlichen senkrecht zu den seitlichen Begrenzungsflächen des Vorratsraums in das Innere des Vorratsraums gelangt. Dies wird insbesondere dadurch erreicht, dass das Gebläse des senkrecht stehenden Rückkühlers ein Axialgebläse ist, dessen Drehachse im Wesentlichen senkrecht zu den seitlichen Begrenzungsflächen des Vorratsraums verläuft.

Die Rückkühler können im Abstand zu den seitlichen Begrenzungsflächen angeordnet sein, die in Strömungsrichtung des Luftstroms Durchgänge in das Innere des Vorratsraums aufweisen. Um einen Wärmeverlust des Luftstroms zu vermeiden, kann dieser durch einen Kanal in das Innere des Vorratsraums geführt werden. Zusätzlich oder alternativ ist es möglich, den Luftstrom über die Dachfläche des Vorratsraums eintreten zu lassen.

Wird der Rückkühler aus baulichen Gründen innerhalb des Vorratsraums angeordnet, ist durch Kanäle oder Öffnungen in den seitlichen und/oder oberen Begrenzungsflächen des Vorratsraums dafür Sorge zu tragen, dass die Ansaugseite mit Frischluft von außerhalb des Vorratsraums versorgt wird.

Ein nochmals verbesserter Wirkungsgrad des Biomassekraftwerks wird erreicht, wenn nicht nur die Biomasse mit der Abwärme getrocknet wird, sondern darüber hinaus die Abwärme des Rückkühlkreislaufs zusätzlich zur Stromerzeugung genutzt wird. Dieses Ziel wird dadurch erreicht, dass der Rückkühlkreislauf über einen vierten Wärmetauscher an einen Niedrigtemperatur-ORC-Turbinenkreislauf mit einer Dampfturbine gekoppelt ist, der Niedrigtemperatur-ORC-Turbinenkreislauf über einen fünften Wärmetauscher an einen Kühlkreislauf mit mindestens einem ein Gebläse aufweisenden Rückkühler gekoppelt ist und jeder Rückkühler an einer der seitlichen oder oberen Begrenzungsflächen des Vorratsraums derart angeordnet ist, dass der von dem Gebläse erzeugte Luftstrom in das Innere des Vorratsraum gelangt. Aufgrund der bereits deutlich niedrigeren Ausgangstemperatur im Rückkühlkreislauf gegenüber dem Kreislauf für das Wärmeträgermedium ist dieser Turbinenkreislauf zwingend als Niedrigtemperatur-ORC-Turbinenkreislauf ausgestaltet. Die Arbeitsflüssigkeit des Niedrigtemperatur-ORC-Turbinenkreislaufs weist eine Verdampfungstemperatur unterhalb von Wasser auf.

Der Wirkungsgrad wird durch ein Verfahren zur Nutzung der Abwärme eines Biomassekraftwerks mit einer Brennkammer für Biomasse gesteigert, bei dem die Abwärme zur Trocknung der Biomasse verwendet wird, die anschließend der Brennkammer des Biomassekraftwerks zugeführt wird.

Eine weitere Verbesserung des Wirkungsgrades wird erzielt, wenn die Abwärme zusätzlich zur Erzeugung von elektrischer Energie genutzt wird, insbesondere mit Hilfe eines Niedrigtemperatur-ORC-Turbinenkreislaufs.

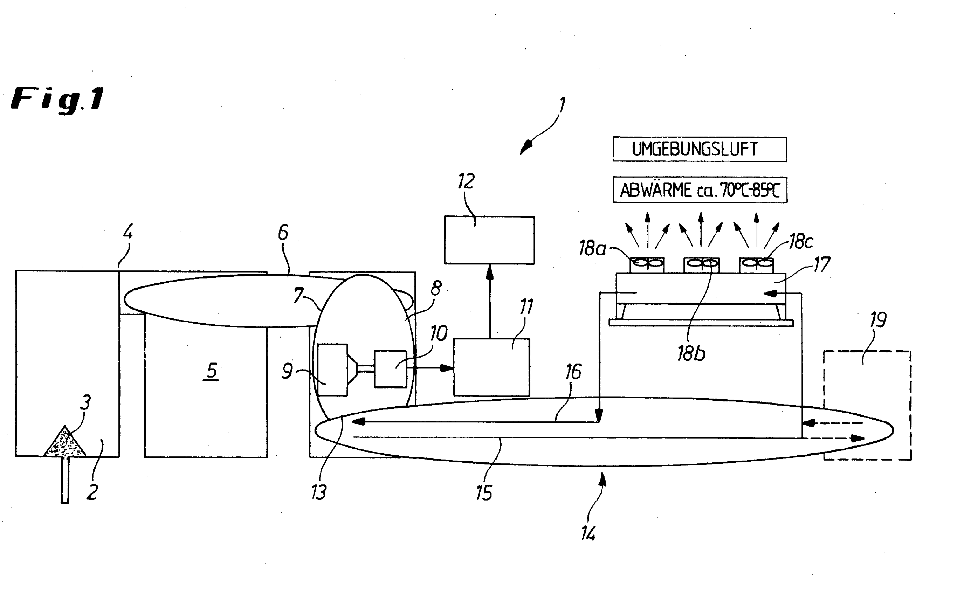

Nachfolgend wird die Erfindung anhand der Figuren 1- 3 näher erläutert. Es zeigen:
- **Figur 1**: eine Skizze zur Veranschaulichung des Aufbaus eines herkömmlichen Biomassekraftwerks,
- **Figur 2**: eine Skizze zur Veranschaulichung des Aufbaus eines erfindungsgemäßen Biomassekraftwerks mit Abwärmenutzung zur Trocknung der Biomasse in einem Vorratsraum sowie
- **Figur 3**: eine Skizze zur Veranschaulichung des Aufbaus eines erfindungsgemäßen Biomassekraftwerks mit einem zusätzlichen Niedrigtemperatur-ORC-Turbinenkreislauf.

Ein Biomassekraftwerk (1) nach dem Stand der Technik umfasst eine Brennkammer (2) zur Verbrennung von Biomasse (3). Ein erster Wärmetauscher (4) umfasst einen Thermoöl-Kessel (5), der Bestandteil eines Thermoöl-Kreislaufs (6) ist. Die Rauchgase in der Brennkammer (2) heizen über den ersten Wärmetauscher (4) das Thermoöl in dem Thermoöl-Kessel (5) auf. An den Thermoöl-Kreislauf (6) ist über einen zweiten Wärmetauscher (7) ein Turbinenkreislauf (8) mit einer Dampfturbine (9) gekoppelt. Der Turbinenkreislauf (8) ist als ORC-Turbinenkreislauf ausgeführt. Das Arbeitsmedium des Turbinenkreislaufs (8) ist eine organische Flüssigkeit, nämlich Silikonöl mit einer Verdampfungstemperatur unterhalb von Wasser. Die Dampfturbine (9) treibt einen Generator (10) an. Die vom Generator (10) erzeugte Spannung wird in einem Transformator (11) umgesetzt und in das Stromnetz (12) eingespeist. Über einen dritten Wärmetauscher (13) ist der Turbinenkreislauf (8) an einen Rückkühlkreislauf (14) mit einem Vorlauf (15) und einem Rücklauf (16) gekoppelt. Zwischen Vor- und Rücklauf (15, 16) befindet sich ein waagerecht angeordneter Rückkühler (17), der mit drei Axialgebläsen (18 a - c) die Abwärme in die Umgebungsluft abbläst. Der von den Gebläsen (18 a - c) erzeugte Abluftstrom weist eine Temperatur von etwa 70° bis 85° Celsius auf.

Optional wird ein Teil der Abwärme in dem Rückkühlkreislauf (14) als Fernwärme (19) genutzt.

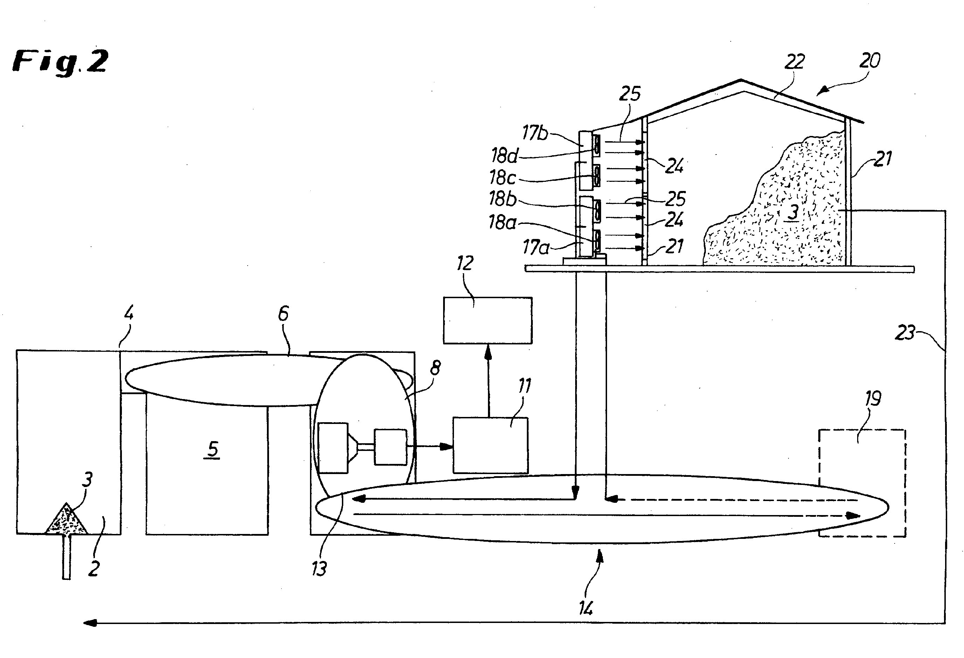

Soweit das erfindungsgemäße Biomassekraftwerk (1) nach Figur 2 übereinstimmend aufgebaut ist, wird auf die vorangegangenen Erläuterungen vollumfänglich Bezug genommen. Zusätzlich ist in Figur 2 ein Vorratsraum (20) für die Biomasse (3) erkennbar, der durch seitliche Begrenzungsflächen (21) in Form von Wänden sowie obere Begrenzungsflächen (22) in Form von Dachflächen begrenzt wird. Zwischen dem Vorratsraum (20) und der Brennkammer (2) ist ein Fördermittel (23) angeordnet, beispielsweise ein Doppel-Kettenförderer mit dem die Biomasse (3) automatisch aus dem Vorratsraum (20) in die Brennkammer (2) gefördert wird.

Wie auch beim Stand der Technik sind zwischen Vorlauf (15) und Rücklauf (16) des Rückkühlkreislaufs (14) mehrere Rückkühler (17 a, b) zur Nutzung der Abwärme geschaltet, wobei die Rückkühler (17 a, b) im Abstand zu einer der Seitenwände (21) des Vorratsraums (20) senkrecht aufgestellt sind, so dass der von den Gebläsen (18 a - d) erzeugte Wärmeluftstrom senkrecht zu der Seitenwand (21) des Vorratsraums (20) verläuft. In der Seitenwand (21) befinden sich Durchtrittsöffnungen (24) für den erwärmten Luftstrom (25). Um Wärmeverluste des Luftstroms (25) zu vermeiden, kann der Strömungsweg zwischen den Axialgebläsen (18 a- d) der Rückkühler (17 a, b) zusätzlich gekapselt sein. Die Ansaugseite der Axialgebläse mündet jedoch stets im Freien.

In dem Rückkühlkreislauf (14) werden beispielsweise 300 m³ Kühlwasser je Stunde umgewälzt. Die Rückkühler (17 a, b) kühlen das Kühlwasser von etwa 95 Grad Celsius auf 90 Grad Celsius ab.

Die dabei von den Axialgebläsen (18 a - d) auf etwa 30 Grad Celsius erwärmte Luftstrom (25) gelangt in das Innere des Vorratsraums (20) für die Biomasse (3), insbesondere Holzreste. Hierdurch wird die Luftfeuchtigkeit im Inneren des Vorratsraums (20) auf unter 20 % abgesenkt und die Biomasse (3) getrocknet. Die optimale Trocknung der Biomasse (3) führt zu einer Wirkungsgradverbesserung in der Brennkammer (2), da zur Erzeugung derselben Wärmemenge in dem Thermoöl-Kreislauf (6) weniger Biomasse (3) benötigt wird.

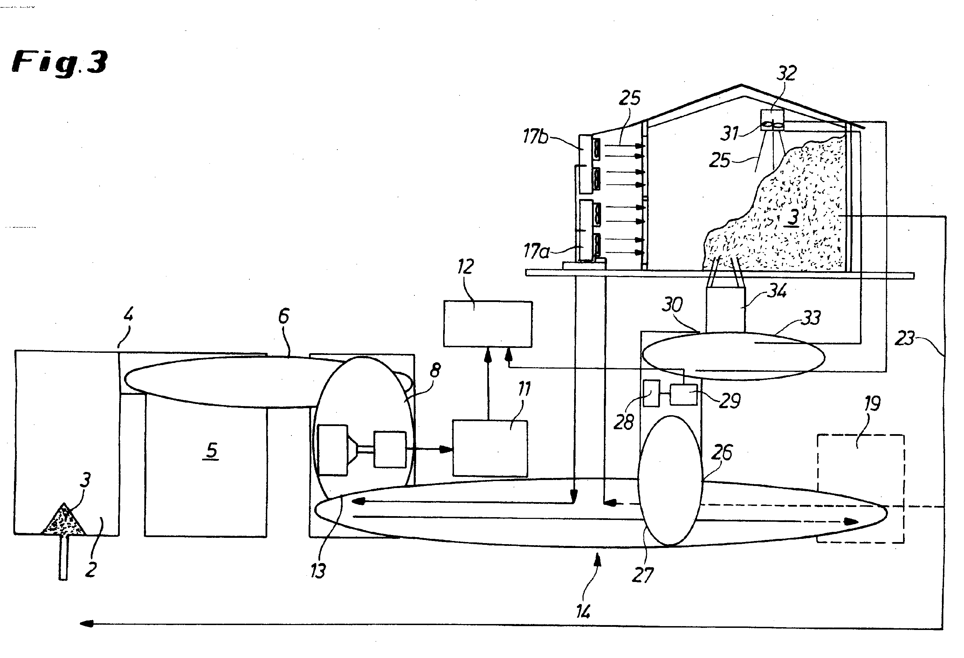

Das Schema des Biomassekraftwerks (1) nach Figur 3 stimmt mit dem Schema nach Figur 2 überein. Zusätzlich ist jedoch über einen vierten Wärmetauscher (26) der Rückkühlkreislauf (14) an einen Niedrigtemperatur-ORC-Turbinenkreislauf (27) mit einer weiteren Dampfturbine (28) und einem weiteren Generator (29) gekoppelt. Der Niedrigtemperatur-ORC-Turbinenkreislauf (27) wird wiederum über einen fünften Wärmetauscher (30) an einen Kühlkreislauf (33) mit mindestens einem ein Gebläse (31) aufweisenden Rückkühler (32) gekoppelt. Der Rückkühler (32) ist im dargestellten Ausführungsbeispiel an der Dachfläche (22) des Vorratsraums (20) befestigt und über einen nicht dargestellten Kanal auf der Ansaugseite des Gebläses (31) mit der Außenluft verbunden. Der warme Luftstrom (25) des Rückkühlers (32) wird zur Beheizung der Biomasse (3) in dem Vorratsraum (20) verwendet. Zusätzlich gelangt der erwärmte Luftstrom (25) der Rückkühler (17 a, b) in das Innere des Vorratsraumes (20).

Das Kühlwasser in dem Kühlkreislauf (33) gelangt beispielsweise mit einer Vorlauftemperatur von 37 Grad Celsius in den Rückkühler (32) und mit einer Rücklauftemperatur von etwa 30 Grad Celsius in einen dem Rückkühler (32) nachgeordneten Kühlturm (34), der die Temperatur des Kühlwassers schließlich von 30 Grad Celsius auf die fixe Rücklauftemperatur von 25 Grad Celsius für den Niedrigtemperatur-ORC-Turbinenkreislauf (27) senkt. Der von dem zusätzlichen Generator (29) erzeugte Strom wird ebenfalls in das Stromnetz (12) eingespeist.

In dieser Ausführungsform des Biomassekraftwerks (1) wird der Wirkungsgrad gegenüber einem herkömmlichen Biomassekraftwerk (1) in mehrfacher Hinsicht verbessert:
1. durch Nutzung der Abwärme im Rückkühlkreislauf (14),
2. durch eine Verbesserung der Verbrennung in der Brennkammer durch besser getrocknete Biomasse sowie
3. durch Einspeisung zusätzlicher Energie durch einen weiteren Generator (29).

**Bezugszeichenliste**

| **Nr.** | **Bezeichnung** | **Nr.** | **Bezeichnung** |
|---|---|---|---|
| 1 | Biomassekraftwerk | 26 | vierter Wärmetauscher |
| 2 | Brennkammer | 27 | NT-ORC-Turbinenkreislauf |
| 3 | Biomasse | 28 | Dampfturbine |
| 4 | erster Wärmeaustauscher | 29 | Generator |
| 5 | Thermoölkessel | 30 | fünfter Wärmetauscher |
| 6 | Thermoölkreislauf | 31 | Gebläse |
| 7 | zweiter Wärmetauscher | 32 | Rückkühler |
| 8 | Turbinenkreislauf | 33 | Kühlkreislauf |
| 9 | Dampfturbine | 34 | Kühlturm |
| 10 | Generator | | |
| 11 | Transformator | | |
| 12 | Stromnetz | | |
| 13 | dritter Wärmetauscher | | |
| 14 | Rückkühlkreislauf | | |
| 15 | Vorlauf | | |
| 16 | Rücklauf | | |
| 17, 17 a, b | Rückkühler | | |
| 18 a, b, c, d | Axialgebläse | | |
| 19 | Fernwärme | | |
| 20 | Vorratsraum | | |
| 21 | seitliche Begrenzungsflächen | | |
| 22 | obere Begrenzungsfläche | | |
| 23 | Fördermittel | | |
| 24 | Durchtrittsöffnungen | | |
| 25 | Luftstrom | | |

## Patentansprüche

1. Biomassekraftwerk mit einer Brennkammer für Biomasse, wobei die Brennkammer über einen ersten Wärmetauscher an einen Kreislauf für ein Wärmeträgermedium gekoppelt ist, der Kreislauf für das Wärmeträgermedium über einen zweiten Wärmetauscher an einen Turbinenkreislauf mit einer Dampfturbine gekoppelt ist, der Turbinenkreislauf über einen dritten Wärmetauscher an einen Rückkühlkreislauf mit mindestens einem mindestens ein Gebläse aufweisenden Rückkühler gekoppelt ist, **dadurch gekennzeichnet, dass** die Brennkammer (2) über ein Fördermittel (23) mit einem Vorratsraum (20) für Biomasse (3) verbunden ist und jeder Rückkühler (17) an einer der seitlichen oder oberen Begrenzungsflächen (21/22) des Vorratsraums derart angeordnet ist, dass der von jedem Gebläse (18) erzeugte Luftstrom (25) in das Innere des Vorratsraum (20) gelangt.

2. Biomassekraftwerk nach Anspruch 1, **dadurch gekennzeichnet, dass** der Turbinenkreislauf (8) ein ORC-Turbinenkreislauf ist.

3. Biomassekraftwerk nach Anspruch 1 oder 2, **dadurch gekennzeichnet, dass** jedes Gebläse des Rückkühlers (17) ein Axialgebläse (18) ist, dessen Drehachse im wesentlichen senkrecht zu den seitlichen Begrenzungsflächen (21) des Vorratsraums (20) verläuft.

4. Biomassekraftwerk nach einem der Ansprüche 1 bis 3, **dadurch gekennzeichnet, dass** der Rückkühlkreislauf (14) über einen vierten Wärmetauscher (26) an einen Niedrigtemperatur-ORC-Turbinenkreislauf (27) mit einer Dampfturbine (28) gekoppelt ist, der Niedrigtemperatur-ORC-Turbinenkreislauf (27) über einen fünften Wärmetauscher (30) an einen Kühlkreislauf (33) mit mindestens einem mindestens ein Gebläse (31) aufweisenden Rückkühler (32) gekoppelt ist und jeder Rückkühler (32) an einer der seitlichen oder oberen Begrenzungsflächen (21,22) des Vorratsraums (20) derart angeordnet ist, dass der von jedem Gebläse (31) erzeugte Luftstrom (25) in das Innere des Vorratsraum (20) gelangt.

## Claims

1. Biomass power plant comprising a combustion chamber for biomass, wherein the combustion chamber is coupled via a first heat exchanger to a circuit for a heat carrier medium, the circuit for the heat carrier medium is coupled via a second heat exchanger to a turbine circuit comprising a steam turbine, the turbine circuit is coupled via a third heat exchanger to a re-cooling circuit comprising at least one re-cooler comprising a blower, **characterised in that** the combustion chamber (2) is connected via a conveying means (23) to a storage chamber (20) for biomass (3) and each re-cooler (17) is located on one of the lateral or upper boundary surfaces (21/22) of the storage chamber in such a manner that the air stream (25) produced by each blower (18) enters into the interior of the storage chamber (20).

2. The biomass power plant according to claim 1, **characterised in that** the turbine circuit (8) is an ORC turbine circuit.

3. The biomass power plant according to claim 1 or 2, **characterised in that** each blower of the re-cooler (17) is an axial blower (18), the axis of rotation whereof runs substantially perpendicular to the lateral boundary surfaces (21) of the storage chamber (20).

4. The biomass power plant according to any one of claims 1 to 3, **characterised in that** the re-cooling circuit (14) is coupled via a fourth heat exchanger (26) to a low-temperature ORC turbine circuit (27) comprising a steam turbine (28), the low-temperature ORC turbine circuit (27) is coupled via a fifth heat exchanger (30) to a cooling circuit (33) comprising at least one re-cooler (32) comprising at least one blower (31) and each re-cooler (32) is disposed on one of the lateral or upper boundary surfaces (21, 22) of the storage chamber (20) in such a manner that the air stream (25) generated by each blower (31) enters into the interior of the storage chamber (20).

## Revendications

1. Centrale électrique à biomasse, avec une chambre de combustion pour de la biomasse, la chambre de combustion étant couplée par l'intermédiaire d'un premier échangeur thermique à un circuit pour un fluide caloporteur, le circuit pour le fluide caloporteur étant couplé par l'intermédiaire d'un deuxième échangeur thermique à un circuit de turbine avec une turbine à vapeur, le circuit de turbine étant couplé par l'intermédiaire d'un troisième échangeur thermique à un circuit réfrigérant de retour avec au moins un refroidisseur de retour comportant au moins un ventilateur, **caractérisée en ce que** la chambre de combustion (2) est reliée par l'intermédiaire d'un moyen de transport (23) avec un espace de stockage (20) pour de la biomasse (3) et **en ce que** chaque refroidisseur de retour (17) est placé sur l'une des surfaces de délimitation latérales ou supérieures (21/22) de l'espace de stockage, de telle sorte que le flux d'air (25) généré par chaque ventilateur (18) arrive à l'intérieur de l'espace de stockage (20).

2. Centrale électrique à biomasse selon la revendication 1, **caractérisée en ce que** le circuit de turbine (8) est un circuit de turbine ORC.

3. Centrale électrique à biomasse selon la revendication 1 ou 2, **caractérisée en ce que** chaque ventilateur du refroidisseur de retour (17) est un ventilateur axial (18) dont l'axe de rotation s'étend sensiblement à la perpendiculaire des surfaces de délimitation (21) latérales de l'espace de stockage (20).

4. Centrale électrique à biomasse selon l'une quelconque des revendications 1 à 3, **caractérisée en ce que** le circuit de refroidissement de retour (14) est couplé par l'intermédiaire d'un quatrième échangeur thermique (26) à un circuit de turbine ORC (27) à basse température avec une turbine à vapeur (28), **en ce que** le circuit de turbine ORC (27) à basse température est couplé par l'intermédiaire d'un cinquième échangeur thermique (30) à un circuit de refroidissement (33) avec un refroidisseur de retour (32) comportant au moins un ventilateur (31) et **en ce que** chaque refroidisseur de retour (32) est placé sur l'une des surfaces de délimitation (21, 22) latérales ou supérieures de l'espace de stockage (20), de telle sorte que le flux d'air (25) généré par chaque ventilateur (31) arrive à l'intérieur de l'espace de stockage (20).
